# EUROPEAN PATENT APPLICATION

(11) **EP 4 814 496 A1**
(43) Date of publication of application: **30.09.2026**
(21) Application number: 26164189.8
(22) Date of filing: 12.03.2026
(51) Int. Cl.: G01P 15/08, G01K 7/32, G01P 1/00, G01P 15/125, G01P 21/00

(54) **MICROELECTROMECHANICAL SYSTEM WITH IMPROVED COMPENSATION OF THE RADIOMETRIC EFFECT**

(30) Priority: 28.03.2025 IT 202500006609
(71) Applicant: STMicroelectronics International N.V., 1228 Plan-les-Ouates, Geneva (CH)
(72) Inventor: GUERINONI, Luca, 20864 Agrate Brianza (MB) (IT); RIZZINI, Francesco, 20864 Agrate Brianza (MB) (IT); GATTERE, Gabriele, 20864 Agrate Brianza (MB) (IT)
(74) Representative: Studio Torta S.p.A.

(57) **Abstract**

MEMS system (10) including: an acceleration transducer (28) that generates an acceleration signal; a first and a second resonator (24,26), which are arranged stacked along a first direction (Z) and are arranged laterally with respect to the acceleration transducer (28), along a second direction (Y); and an electronic circuit (20). The first and second resonators (24,26) generate a first and a second oscillation signal, respectively, which are indicative of a first and a second resonance frequency (f₁,f₂), respectively, which depend on the temperatures of the first and second resonators (24,26). The electronic circuit (20) determines an uncompensated value (Z_{outraw}) of an acceleration, based on the acceleration signal, determines current values of the first and second resonance frequencies, based on the first and second oscillation signals, determines an estimation (XLD) of an offset of the acceleration signal caused by a temperature gradient along the first direction (Z), based on the current values of the first and second resonance frequencies, and determines a compensated value (Z_{outcomp}) of the acceleration based on the uncompensated value (Z_{outraw}) and the offset estimation (XLD).

## Description

### Technical Field

The present invention relates to a microelectromechanical (MEMS) system exhibiting improved compensation of the radiometric effect.

### Background

In the field of microelectromechanical sensors, it is known that the temperature gradient along the so-called out-of-plane direction of a sensor may cause an offset that negatively affects the sensor's sensing capacity. This offset is caused by the so-called radiometric effect that occurs on the movable mass of the sensor, in case the movable mass is subject to a temperature gradient along the out-of-plane direction.

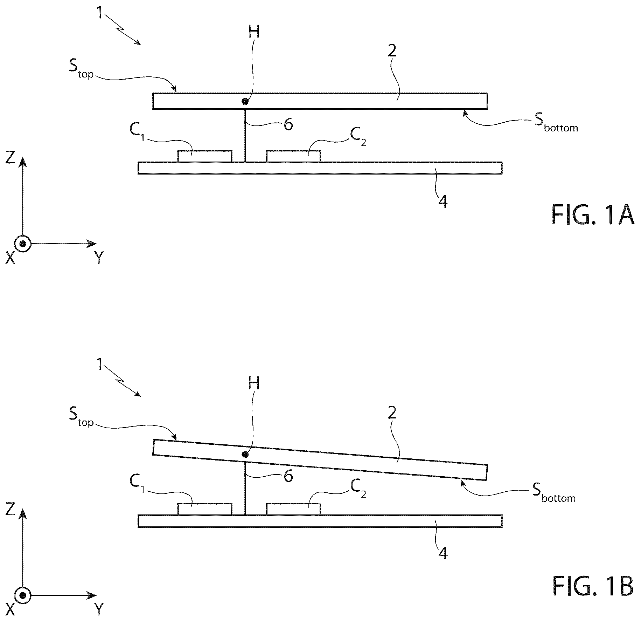

Purely by way of example, Figure 1A shows an acceleration transducer 1, which comprises a movable mass 2, which is suspended above a substrate 4 having a planar shape parallel to an XY plane, by interposing a support structure 6, which allows the rotation of the movable mass 2 around an H-axis parallel to the XY plane, as a function of the acceleration along an Z-axis, perpendicular to the XY plane, to which the acceleration transducer 1 is subject.

In particular, the movable mass 2 has an asymmetric shape with respect to the H-axis, such that the acceleration along the Z-axis is transduced into a rotation angle of the movable mass 2, which is sensed capacitively, by using electrodes C₁, C₂ arranged on the substrate 4 and forming corresponding variable capacitors with corresponding portions of the movable mass 2 that overlie such electrodes C₁, C₂.

In more detail, the movable mass 2 is delimited at the top and at the bottom by a top surface Sₜₒₚ and a bottom surface S_{bottom}, which are approximately flat and are arranged, in rest conditions, that is, in the absence of acceleration along the Z-axis and in the absence of a thermal gradient between the top surface Sₜₒₚ and the bottom surface S_{bottom}, parallel to the XY plane, as shown in Figure 1A. In practice, the top surface Sₜₒₚ and the bottom surface S_{bottom} represent opposite faces of the movable mass 2. In the presence of a difference between the temperature at which the top surface Sₜₒₚ is and the temperature at which the bottom surface S_{bottom} is, it occurs that, even in the absence of acceleration along the Z-axis, the movable mass 2 is rotated with respect to the rest position, due to the radiometric forces acting on the movable mass 2, as shown in Figure 1B; this generates an unwanted offset on the signal generated by the acceleration transducer 1, and therefore an error in the acceleration measurement.

That having been said, in order to reduce as much as possible the offsets caused by the radiometric forces in microelectromechanical sensors, and in particular in accelerometers, different solutions have been proposed, some of which for example envisage the use of holed movable masses having areas with different thicknesses, but symmetrical in top view with respect to the rotation axis, so as to maintain an asymmetry that allows the transduction of the acceleration in a rotation of the movable mass, but symmetrizing the shape of the movable mass with regard to its interaction with the gas molecules present in the sensor (this interaction being a function of the number and size of the holes), so as to balance the radiometric forces acting on the movable mass. However, this solution has proven to be subject to non-negligible residual radiometric effects.

Patent application US 2022/0057423 A1 instead describes a sensor system comprising a sensor, that includes a processing circuit, and an acceleration sensor. The processing circuit is configured to sense one or more temperature-dependent variables and/or properties of the sensor and to correct an offset of an acceleration sensor signal induced by a temperature gradient with the aid of the one or more temperature-dependent variables and/or properties of the sensor. The improvement in acceleration sensor performance achievable through this solution is, however, limited by the fact that the sensor temperature represents a fairly approximate indication of the temperature gradient to which the movable mass of the acceleration sensor is actually subject, this temperature gradient being, as explained above, the actual cause of the radiometric forces acting on the movable mass; consequently, the offset correction is relatively approximate and may be insufficient for some applications.

### Summary

It is therefore an aim of the present invention to overcome at least in part the drawbacks of the prior art.

According to the present invention, a microelectromechanical system is provided as defined in the attached claims.

### Brief Description of the Figures

For a better understanding of the present invention, preferred embodiments are presented, by way of non-limiting example, with reference to the attached drawings, wherein:
- Figures 1A and 1B show schematically cross-sections of a portion of a microelectromechanical transducer, in two different operating conditions;
- Figure 2 shows schematically a cross-section of the present MEMS system;
- Figure 3 shows schematically a top view of a MEMS resonator; and
- Figure 4 shows a block diagram of operations performed by the present MEMS system.

### Description of Embodiments

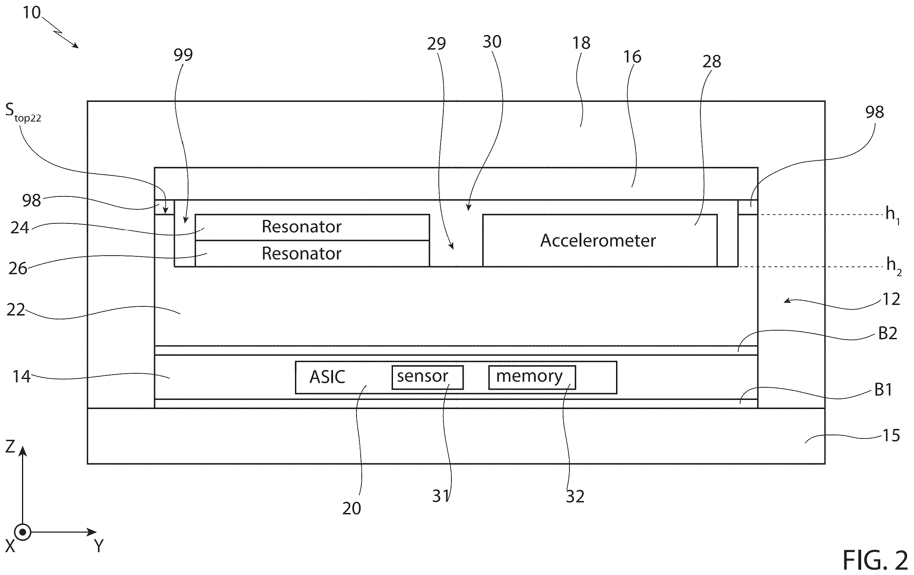

Figure 2 shows a MEMS system 10, which comprises a first and a second semiconductive die 12, 14, a substrate 15, a cap 16 and a package region 18.

The substrate 15 is formed by dielectric material (for example, the so-called FR4 material) and extends parallel to the XY plane; conductive tracks and contacts (not shown) may extend within the substrate 15. The second semiconductive die 14 is arranged above the substrate 15, for example by interposing a first bonding region B1. An electronic circuit 20, which is for example an ASIC circuit and includes a memory 31 of the non-volatile type and a temperature sensor 32, is formed within the second semiconductive die 14.

The first semiconductive die 12 is arranged above the second semiconductive die 14.

In particular, the first semiconductive die 12 comprises a semiconductor body 22, which is arranged above the second semiconductive die 14, for example by interposing a second bonding region B2. The semiconductor body 22 is delimited at the top by a front surface Sₜₒₚ₂₂, parallel to the XY plane; furthermore, a cavity 99, which is open at the top and is delimited at the bottom and laterally by the semiconductor body 22, extends within the semiconductor body 22.

The first semiconductive die 12 forms a first and a second MEMS resonator 24, 26 and an acceleration transducer 28 of the MEMS type. The first and second MEMS resonators 24, 26 and the acceleration transducer 28 are arranged in the cavity 99 and are electrically coupled to the electronic circuit 20. Without any loss of generality, the acceleration transducer 28 may for example be the same as the acceleration transducer 1 shown in Figures 1A and 1B.

In more detail, the first and second MEMS resonators 24, 26 are stacked vertically, i.e. parallel to the Z-axis; in particular, the first MEMS resonator 24 overlies the second MEMS resonator 26, that in turn overlies a corresponding portion of the semiconductor body 22, that delimits the cavity 99 at the bottom. Furthermore, along the Y-axis, the ensemble formed by the first and second MEMS resonators 24, 26 is arranged at the side of the acceleration transducer 28, which overlies a corresponding portion of the semiconductor body 22, which delimits the cavity 99 at the bottom. The ensemble formed by the first and second MEMS resonators 24, 26 is separated from the acceleration transducer 28 due to the interposition of a trench 29, that extends parallel to the X-axis.

Without any loss of generality, the acceleration transducer 28 extends between a first and a second height h₁, h₂; furthermore, also the ensemble formed by the first and second MEMS resonators 24, 26 extends between the first and second heights h₁, h₂. The ensemble formed by the first and second MEMS resonators 24, 26 therefore has the same thickness, along the Z-axis, as the acceleration transducer 28. Purely by way of example, and therefore without any loss of generality, in Figure 2 the first and second heights h₁, h₂ are the heights to which the front surface Sₜₒₚ₂₂ of the semiconductor body 22 and the bottom of the cavity 99 extend respectively.

In practice, the first semiconductive die 12 may be formed starting from a first semiconductive wafer (not shown), by a corresponding manufacturing process, while the second semiconductive die 14 may be formed starting from a second semiconductive wafer (not shown).

The cap 16 is formed, for example, by semiconductor material and may be formed, for example, starting from a third semiconductive wafer (not shown). Furthermore, the cap 16 is coupled to the front surface Sₜₒₚ₂₂ of the semiconductor body 22, for example by interposing a coupling region 98, which is formed, for example, by glass-frit or a metal alloy.

In particular, the cap 16 overlies the first MEMS resonator 24 and the acceleration transducer 28. Air may be present between the cap 16 and the first MEMS resonator 24 and the acceleration transducer 28, as well as within the trench 29.

The package region 18 is formed for example by resin and extends so as to overlie the cap 16 and so as to laterally coat the group formed by the first and second semiconductive dice 12, 14, by the cap 16 and by the coupling region 98, until it contacts the substrate 15 at the bottom, so as to seal, in cooperation with the substrate 15, said group.

In practice, the cap 16, the coupling region 98 and the semiconductor body 22 delimit a chamber 30, which comprises the cavity 99, and within which the first and second MEMS resonators 24, 26 and the acceleration transducer 28 are arranged. In this manner, the first and second MEMS resonators 24, 26 and the acceleration transducer 28 are subject to the same pressure.

In more detail, the first and second MEMS resonators 24, 26 may comprise respective movable masses (not shown), which are configured to oscillate according to respective drive modes; in particular, the drive modes of the first and second MEMS resonators 24, 26 have a first and a second resonance frequency f₁, f₂, respectively. Furthermore, in a manner known per se, the electronic circuit 20 implements closed-loop control circuits (not shown) configured such that the movable masses of the first and second MEMS resonators 24, 26 oscillate with frequencies respectively equal to the first and second resonance frequencies f₁, f₂, which depend on the temperature.

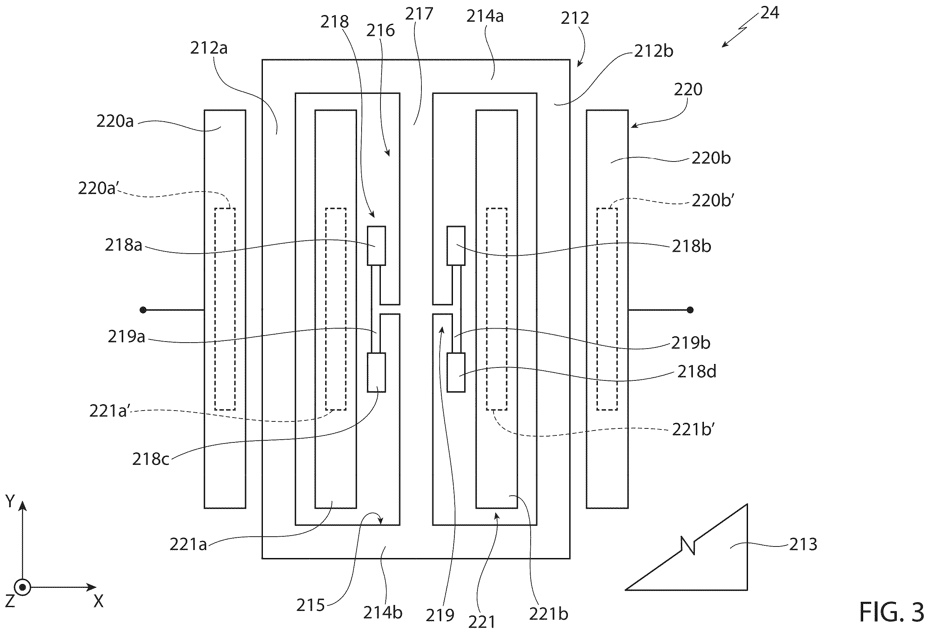

Alternatively, and again by way of example, the first and second MEMS resonators 24, 26 may also be of the same type as any of the embodiments described in European patent application EP 18172940.1, filed on May 17, 2018 and published with no. EP 3407492 A1, and in the corresponding patent US 10,501,310 B2. In this case, as shown in Figure 3, which by way of example refers to the first MEMS resonator 24 (the same considerations also apply to the second MEMS resonator 26), the following occurs.

The first MEMS resonator 24 comprises a respective substrate 213 and a movable structure 212, which is suspended above the substrate 213, has a main extension in a plane parallel to the XY plane and comprises a first and a second bending arm 212a, 212b, parallel to each other and having elongated shapes parallel to the Y-axis, the first and the second bending arms 212a, 212b being coupled at respective ends through a first and a second transversal connecting element 214a, 214b, which have elongated shapes parallel to the X-axis, thereby internally defining a window 215. The first MEMS resonator 24 further comprises: a first electrode structure 220, arranged outside the window 215 and capacitively coupled to the movable structure 212; and a second electrode structure 221, arranged within the window 215 and capacitively coupled to the movable structure 212, one of said first and second electrode structures 220, 221 having the function of causing an oscillation movement of the first and second bending arms 212a, 212b, in the opposite direction parallel to the X-axis, the other of said first and second electrode structures 220, 221 having the function of sensing the aforementioned oscillation. In particular, the first electrode structure 220 comprises a first and a second external electrode 220a, 220b, arranged facing and parallel respectively to the first and second bending arms 212a, 212b, externally with respect to the resonant movable structure 212 and the window 215; the second electrode structure 221 comprises a first and a second internal electrode 221a, 221b, arranged within the window 215, respectively facing and parallel to the first and second bending arms 212a, 212b. Furthermore, in Figure 3 the anchoring elements of the aforementioned external electrodes 220a, 220b and internal electrodes 221a, 221b are indicated by 220a', 220b' and, respectively, 221', 221b'.

Again with reference to Figure 3, the first and second bending arms 212a, 212 oscillate according to an oscillation mode of the first MEMS resonator 24; furthermore, also in this case the electronic circuit 20 implements a closed-loop control circuit (not shown), which is coupled to the first and second electrode structures 220, 221 and is such that the first and second bending arms 212a, 212 oscillate with a frequency equal to the first resonance frequency f₁, that is the resonance frequency of the aforementioned oscillation mode of the first MEMS resonator 24 and depends on the temperature.

Again with reference to Figure 3, the first MEMS resonator 24 further comprises a suspension structure 216, which maintains the movable structure 212 in suspension, above the substrate 213. The suspension structure 216 comprises a suspension arm 217, that extends within the window 215, between the first and second transversal connecting elements 214a, 214b, and an anchoring structure 218, which is coupled to the suspension arm 217 and to the substrate 213 and is arranged centrally within the window 215, in proximity to the second electrode structure 221. The anchoring structure 218 comprises, for example, a first, a second, a third and a fourth anchor 218a-218d, for example formed by respective pillar elements that extend parallel to the Z-axis to the substrate 213. The suspension structure 216 further comprises a first and a second connection element 219a, 219b. The first connection element 219a connects the first and third anchors 218a, 218c to a central portion of the suspension arm 17; the second connection element 219a connects the second and fourth anchors 218b, 218d to the central portion of the suspension arm 17.

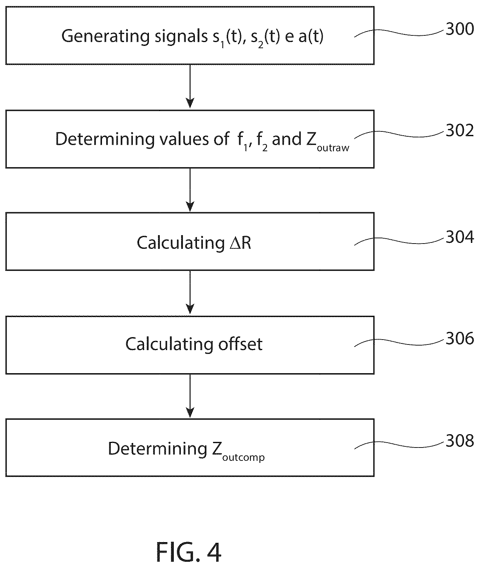

In practice, regardless of the implementation details of the first and second MEMS resonators 24, 26, the operations shown in Figure 4 and described herein below occur in the MEMS system 10.

In use, the first and second MEMS resonators 24, 26 and the acceleration transducer 28 generate (block 300) respectively a first and a second oscillation signal s₁(t), s₂(t) and an acceleration signal a(t), which is indicative for example of an acceleration directed parallel to the Z-axis to which the MEMS system 10 is subject. The first and second oscillation signals s₁(t), s₂(t) are indicative of the first and second resonance frequencies f₁, f₂, which, as previously explained, are the resonance frequencies of the oscillation modes of the first and second MEMS resonators 24, 26.

Based on the first and second oscillation signals s₁(t), s₂(t) and the acceleration signal a(t), the electronic circuit 20 determines (block 302) the current values of the first and second resonance frequencies f₁, f₂ and a value Z_{outraw} of the aforementioned acceleration, which is hereinafter referred to as the acceleration measurement Z_{outraw}.

That having been said, before continuing the description of the operations performed by the MEMS system 10, the following should be noted.

Assuming that the first and second MEMS resonators 24, 26 are at a temperature T₁ and a temperature T₂, respectively, the dependence of the first and second resonance frequencies f₁, f₂ on the temperature T₁ and, respectively, on the temperature T₂, may be explained indicating the current values of the first and second resonance frequencies f₁, f₂ as f₁(T₁) and f₂(T₂), respectively. There also apply the relationships: ${f}_{1} \left({T}_{1}\right) = {f}_{1} \left({T}_{0}\right) ⋅ \left[1+α⋅\left({T}_{1}-{T}_{0}\right)\right]$ ${f}_{2} \left({T}_{2}\right) = {f}_{2} \left({T}_{0}\right) ⋅ \left[1+α⋅\left({T}_{2}-{T}_{0}\right)\right]$ where f₁(T₀) and f₂(T₀) represent, respectively, the values of the first and second resonance frequencies f₁, f₂ when both the first and second MEMS resonators 24, 26 are at a reference temperature T₀, and where α is a coefficient that is assumed to be valid, as a first approximation, for both the first and second MEMS resonators 24, 26. In particular, the temperature T₀ is a temperature imposed during a calibration step of the MEMS system 10, while the values f₁(T₀) and f₂(T₀) represent measurements of the first and second resonance frequencies f₁, f₂, as determined by the electronic circuit 20 during the calibration step. The values f₁(T₀) and f₂(T₀) may be stored for example in the memory 31 of the electronic circuit 20.

Reference may also be made to a ratio R=f₁(T₁)/f₂(T₂) and to the quantity ΔR=f₁(T₁)/f₂(T₂)-f₁(T₀)/f₂(T₀), that indicates the variation of the ratio R with respect to the value assumed during the calibration step, this variation being caused by the temperature difference present between the first and second MEMS resonators 24, 26. That having been said, the following equations apply: $Δ R = \frac{{f}_{1} \left({T}_{0}\right) ⋅ \left(1+α⋅\left({T}_{1}-{T}_{0}\right)\right)}{{f}_{2} \left({T}_{0}\right) ⋅ \left(1+α⋅\left({T}_{2}-{T}_{0}\right)\right)} - \frac{{f}_{1} \left({T}_{0}\right)}{{f}_{2} \left({T}_{0}\right)}$ $Δ R = \frac{{f}_{1} \left({T}_{0}\right) ⋅ \left(1+α⋅\left({T}_{1}-{T}_{0}\right)\right) - \left(1+α⋅\left({T}_{2}-{T}_{0}\right)\right)}{{f}_{2} \left({T}_{0}\right) ⋅ \left(1+α⋅\left({T}_{2}-{T}_{0}\right)\right)}$ $Δ R = \frac{{f}_{1} \left({T}_{0}\right) ⋅ \left(α⋅\left({T}_{1}-{T}_{2}\right)\right)}{{f}_{2} \left({T}_{0}\right) ⋅ \left(1+α⋅\left({T}_{2}-{T}_{0}\right)\right)}$

Furthermore, as a first approximation, the following may be assumed: $1 + \left(α⋅\left({T}_{2}-{T}_{0}\right)\right) \approx 1$

Consequently, the following relationship applies: $Δ R \approx \frac{{f}_{1} \left({T}_{0}\right)}{{f}_{2} \left({T}_{0}\right)} ⋅ \left(α⋅\left({T}_{1}-{T}_{2}\right)\right)$

As regards the acceleration transducer 28, in the presence of a temperature gradient on the respective movable mass, the acceleration measurement Z_{outraw} is affected by an offset caused by radiometric effects, hereinafter referred to as offset XLD.

Thanks to the arrangement of the first and second MEMS resonators 24, 26, as a first approximation it may be assumed that the offset XLD depends linearly on the difference between the temperature T₁ and the temperature T₂, which represents an estimation of the temperature gradient present on the movable mass of the acceleration transducer 28. Therefore, the following relationship applies: $XLD \approx K ⋅ \left({T}_{1}-{T}_{2}\right)$ where K is an unknown constant. Furthermore, since, as previously explained, the quantity ΔR depends on the difference between the temperature T₁ and the temperature T₂, the following relationship also applies: $XLD \approx \frac{K}{α ⋅ \frac{{f}_{1} \left({T}_{0}\right)}{{f}_{2} \left({T}_{0}\right)}} ⋅ Δ R$

Consequently, since the quantity K/α/[f₁(T₀)/f₂(T₀)] is constant, it occurs that, as a first approximation, the offset XLD caused by the radiometric effects is directly proportional to the quantity ΔR, that is, the following occurs: $XLD \approx K ′ ⋅ Δ R$ where K'= K/α/[f₁(T₀)/f₂(T₀)].

All this having been said, the electronic circuit 20 stores the value of K' in the memory 31; in particular, the value of K' may be preliminarily determined in a characterization step of the MEMS system 10, wherein the temperatures of the first and second MEMS resonators 24, 26, and therefore indirectly also the quantity ΔR, are imposed.

Again with reference to Figure 4, the electronic circuit 20 calculates (block 304) the quantity ΔR. In particular, at any instant the electronic circuit 20 may calculate the corresponding value of the quantity ΔR based on the stored values f₁(T₀) and f₂(T₀) and based on the current values f₁(T₁), f₂(T₂) of the first and second resonance frequencies f₁, f₂.

Furthermore, the electronic circuit 20 calculates (block 306) the offset XLD, based on the stored value of K' and the quantity ΔR. Furthermore, the electronic circuit 20 determines (block 308) a compensated acceleration measurement Z_{outcomp}, equal to: ${Z}_{outcomp} = {Z}_{outraw} - XLD$

The compensated acceleration measurement Z_{outcomp} represents a measurement of the acceleration, wherein the unwanted offset caused by the radiometric effects generated by the temperature gradient present in the acceleration transducer 28 has been cancelled, as a first approximation.

The advantages that the present MEMS system affords are therefore clear from the preceding description. In fact, the present MEMS system is characterized by the ability to generate acceleration measurements that, as a first approximation, are immune from unwanted offsets caused by radiometric effects, without any need to measure the temperatures actually present on the faces of the movable mass of the acceleration transducer.

Finally, it is clear that modifications and variations may be made to what has been described and illustrated herein without thereby departing from the scope of the present invention, as defined in the attached claims.

For example, the resonators and/or the acceleration transducer may differ from what has been described. However, the adoption of resonators of the type shown in Figure 3 allows to improve the so-called quality factor Q and to make the frequency independent of mechanical stresses due to package.

In case the first and second resonators are of the type shown in Figure 3, the respective orientations with respect to the axes X and Y may vary from what has been described.

In general, the first and second resonators may be manufactured for example by the manufacturing process described in the European patent EP 3,912,953 B1 and in the corresponding patent US 11,945,712 B2.

Furthermore, although not shown, the stacked arrangement of the first and second resonators may be obtained by means of any support structure (not shown).

The acceleration transducer may transduce an acceleration directed along an axis other than the Z-axis, although in this case the estimation of the offset caused by radiometric effects may be less precise.

The first and second MEMS resonators may also be arranged in a different chamber from the chamber where the acceleration transducer is present, in which case the first and second MEMS resonators may undergo a different pressure with respect to the acceleration transducer.

Finally, in case the approximation α*(T₂-T₀)=0 is not acceptable, the precision of the offset XLD estimation may be further improved, by adopting the relationship: $XLD \approx \frac{K}{α ⋅ \frac{{f}_{1} \left({T}_{0}\right)}{{f}_{2} \left({T}_{0}\right)}} ⋅ Δ R ⋅ \left(1+α⋅\left({T}_{2}-{T}_{0}\right)\right)$ i.e.: $XLD \approx K ′ ⋅ Δ R ⋅ \left(1+α⋅\left({T}_{2}-{T}_{0}\right)\right)$ In this case, the electronic circuit 20 calculates the offset XLD not only based on the stored value of K' and the quantity ΔR, but also based on the coefficient α and the temperature T₀, which are known through the calibration step and are stored in the memory 31, as well as based on the temperature T₂, which is estimated by the temperature sensor 32, thanks to the proximity of the second MEMS resonator 26 to the electronic circuit 20.

## Claims

1. A MEMS system (10) comprising:
- an acceleration transducer (28) configured to generate an acceleration signal;
- a first and a second resonator (24,26), which are arranged stacked along a first direction (Z), the first and second resonators (24,26) being further arranged laterally with respect to the acceleration transducer (28), along a second direction (Y) transversal to the first direction (Z); and
- an electronic circuit (20);
and wherein the first and second resonators (24,26) are configured to generate a first and a second oscillation signal, respectively, which are indicative of a first and a second resonance frequency (f₁,f₂), respectively, which depend on the temperature (T₁) of the first resonator (24) and the temperature (T₂) of the second resonator (26), respectively; and wherein the electronic circuit (20) is configured to:
- determine an uncompensated value (Z_{outraw}) of an acceleration to which the MEMS system (10) is subject, based on the acceleration signal;
- based on the first and second oscillation signals, determine a current value (f₁(T₁)) of the first resonance frequency and a current value (f₂(T₂)) of the second resonance frequency;
- determine an estimation (XLD) of an offset of the acceleration signal caused by a temperature gradient along the first direction (Z) present on the acceleration transducer (28), based on the current values (f₁(T₁),f₂(T₂)) of the first and second resonance frequencies; and
- determine a compensated value (Z_{outcomp}) of said acceleration based on the uncompensated value (Z_{outraw}) and the offset estimation (XLD).

2. The MEMS system according to claim 1, wherein the electronic circuit (20) is further configured to:
- store a coefficient (K') indicative of a linear relationship present between the offset of the acceleration signal and a frequency quantity (ΔR) that is a function of the ratio between the first and second resonance frequencies (f₁,f₂); and
- determine a current value of the frequency quantity (ΔR), based on the current values (f₁(T₁),f₂(T₂)) of the first and second resonance frequencies; and
- determine the offset estimation (XLD) based on the coefficient (K') and the current value of the frequency quantity (ΔR).

3. The MEMS system according to claim 2, wherein the frequency quantity (ΔR) is a function of the difference between the ratio between the first and second resonance frequencies (f₁,f₂) and the ratio between the values (f₁(T₀),f₂(T₀)) of the first and second resonance frequencies when the first and second resonators (24,26) are both at a reference temperature (T₀).

4. The MEMS system according to any of the preceding claims, further comprising a semiconductor body (22); and wherein the first and second resonators (24,26) and the acceleration transducer (28) are formed above the semiconductor body (22).

5. The MEMS system according to claim 4, further comprising a cap (16), which delimits, together with the semiconductor body (22), a chamber (30); and wherein the first and second resonators (24,26) and the acceleration transducer (28) are arranged in the chamber (30).

6. The MEMS system according to claim 4 or 5, further comprising a semiconductive die (14), which is arranged below the semiconductor body (22); and wherein the electronic circuit (20) is formed in the semiconductive die (14).

7. The MEMS system according to claim 6, wherein the first resonator (24) is arranged above the second resonator (26); and wherein the electronic circuit (20) comprises a temperature sensor (32) configured to generate an estimation of the temperature (T₂) of the second resonator (26); and wherein the electronic circuit (20) is further configured to determine said offset estimation (XLD) also based on the temperature (T₂) of the second resonator (26).

8. The MEMS system according to any of the preceding claims, wherein the acceleration transducer (28) extends, along the first direction (Z), between a first and a second height (h₁, h₂), and wherein also the ensemble formed by the first and second resonators (24, 26) extends between the first and second heights (h₁, h₂).

9. The MEMS system according to any of the preceding claims, wherein the acceleration signal is indicative of an acceleration to which the MEMS system (10) is subject parallel to the first direction (Z).

10. The MEMS system according to any of the preceding claims, wherein each of the first and second resonators (24, 26) comprises:
- a respective substrate structure (213);
- a movable structure (212), which comprises a first and a second bending arm (212a, 212b), which have elongated shapes along a respective axis (Y) and are coupled at respective ends by a first and a second transversal connecting element (214a,214b), so as to internally define a window (15);
- a first electrode structure (220), arranged outside the window (215) and capacitively coupled to the movable structure (212);
- a second electrode structure (221), arranged within the window (215) and capacitively coupled to the movable structure (212), one of said first and second electrode structures (220, 221) having the function of causing an oscillation movement of the first and second bending arms (212a, 212b), the other of said first and second electrode structures (220,221) having the function of sensing said oscillation; and
- a suspension structure (316), configured to suspend the movable structure (212) above the substrate structure (213) and comprising a suspension arm (217) extending within the window (215), between the first and second transversal connecting elements (214a,214b), and an anchoring structure (218), coupled to the suspension arm (217) and the substrate structure (213), centrally arranged within the window (15) in proximity to the second electrode structure (221).
